# EUROPEAN PATENT APPLICATION

(11) **EP 4 748 469 A1**
(43) Date of publication of application: **27.05.2026**
(21) Application number: 24849357.9
(22) Date of filing: 13.06.2024
(51) Int. Cl.: B01D 35/30, B01D 35/147, B01D 39/20

(54) **WATER TREATMENT APPARATUS**

(30) Priority: 02.08.2023 KR 20230101185
(71) Applicant: LG Electronics Inc., Yeongdeungpo-gu Seoul 07336 (KR)
(72) Inventor: KIM, Youngjae, Seoul 08592 (KR); JEONG, Soongy, Seoul 08592 (KR)
(74) Representative: Ter Meer Steinmeister & Partner
(86) International application number: PCT/KR2024/008141
(87) International publication number: WO 2025/028786

(57) **Abstract**

The present invention relates to a water treatment apparatus comprising: a filter socket which has an inlet formed at one side thereof and an outlet formed at the other side thereof with respect to a first direction; a filter housing within which a filtration space is formed; a filter head which is coupled to the upper side of the filter housing; and a cylindrical flow path switching member to which the filter head is coupled and which is accommodated in the filter socket and switches the flow paths while rotating about the first direction as the axis of rotation.

## Description

### [Technical Field]

The present disclosure relates to a water treatment apparatus capable of simultaneously replacing a filter head when replacing a filter.

### [Background Art]

Water dispensing apparatus, such as water purifiers and refrigerators, purify raw water, such as tap water or groundwater. In other words, they are apparatus that convert raw water into potable water through various purification methods.

To produce purified water, processes such as sedimentation, filtration, and sterilization may be used, and it is common for harmful substances to be removed through these processes.

Typically, water dispensing apparatus may be equipped with various filters to purify raw water. These filters can be categorized by function into sediment filters, activated carbon filters, UF hollow fiber membrane filters, and RO membrane filters.

The sediment filter can be said to be a filter for settling large particle contaminants or floating substances in raw water, and the activated carbon filter can be said to be a filter for removing small particle contaminants, residual chlorine, volatile organic compounds, or odor-causing factors by adsorbing them.

In addition, the activated carbon filter may generally be equipped with two filters. In other words, the activated carbon filter may be equipped with a pre-activated carbon filter equipped on the raw water side and a post-activated carbon filter equipped on the purified water side. The post-activated carbon filter may be equipped primarily to improve the taste of water by removing odor-causing substances that affect the taste of purified water.

Additionally, it is common for UF hollow fiber membrane filters and RO membrane filters to be used selectively.
<Prior Document 1: 10-2016-0034309>
<Prior Document 2: 10-2016-0037995>

In the case of prior documents 1 and 2, a water treatment apparatus equipped with a replaceable filter is disclosed.

In the case of the prior art according to prior art documents 1 and 2, when the filter is removed, a large area of the flow path is formed that is exposed to the outside, and thus, there is a high possibility that external foreign substances will be introduced.

Additionally, as the flow path area exposed to the outside increases, the space where water remains also increases, which can cause discoloration due to water stains and create an aesthetically undesirable appearance.

In addition, since there is no separate filter removal prevention structure, there is a problem that may occur when the filter is removed during movement or storage.

In addition, in the conventional case, as the number of parts installed in the center of the filter head through which water flows, such as shafts, increases, resistance to the flow of water increases, which causes problems such as water leakage or a decrease in the processing flow rate.

In addition, since a structure that holds the filter so that the filter does not separate from the filter head is not applied, there was a problem in which the filter head and filter housing were separated when the filter head was separated from the filter socket or when the filter head was mounted in the filter socket.

### [Disclosure]

### [Technical Problem]

The present disclosure proposes a water treatment apparatus in which, when replacing a filter, the filter can be installed simply by fitting the filter and rotating the filter downward or to one side, and the filter and filter head can be separated simply by rotating the filter upward or to the other side and then removing filter, thereby reducing the difficulty of the work required for filter replacement and enabling the user to directly replace the filter when necessary.

In addition, a water treatment apparatus is proposed that can reduce the resistance of the flow path, increase the treatment flow rate, and reduce the risk of leakage by reducing the number of parts such as shafts disposed in the water flow path.

In addition, a water treatment apparatus is proposed in which water that has introduced the filter socket can be bypassed and then discharged without leaking when replacing the filter.

### [Technical Solution]

The water treatment apparatus of the present disclosure proposed to solve the above problem includes a filter socket having an introduction port formed on one side and a discharge port formed on the other side relative to a first direction; a filter housing forming a filtration space therein; a filter head coupled to an upper side of the filter housing; and a cylindrical flow path switching member to which the filter head is coupled, which is accommodated in the filter socket, and which rotates about the first direction as an axis.

In addition, the flow path switching member includes a bypass flow path configured to guide water introduced into the introduction port to the discharge port in a first state where the filter head is coupled; a water introduction flow path configured to guide water introduced into the introduction port toward the filter head and filter housing in a second state rotated by a predetermined angle relative to the first state; and a water discharge flow path configured to guide water from the filter housing and the filter head toward the discharge port.

In addition, when rotating downward from the first state, it becomes the second state.

In addition, when lifting upward from the second state, it becomes the first state.

In addition, the filter head includes a water introduction pipe extending in the second direction and configured to communicate with the water introduction flow path, and a water discharge pipe extending in the second direction and formed parallel to the water introduction pipe and configured to communicate the water discharge flow path.

In addition, the water introduction flow path, in the second state, includes a first inlet configured to communicate with the introduction port and a first outlet configured to communicate with the water introduction pipe.

In addition, the water discharge flow path, in the second state, includes a second inlet configured to communicate with the water discharge pipe and a second outlet configured to communicate with the discharge port.

In addition, the first inlet and the first outlet are formed in an intersecting direction, and the second inlet and the second outlet are also formed in an intersecting direction.

In addition, at least a portion of the water introduction flow path and the water discharge flow path are formed in a curved shape or at least a portion of the water introduction flow path and the water discharge flow path are formed in a folded shape.

In addition, the first inlet and the second outlet are formed on the same line in the first direction, and the first outlet and the second inlet are formed on the same line in the first direction.

In addition, the bypass flow path, in the first state, includes a third inlet configured to communicate with the introduction port and a third outlet configured to communicate with the discharge port.

In addition, an intermediate flow path extending in the first direction and configured to bypass the water introduction flow path and the water discharge flow path is formed between the third inlet and the third outlet.

In addition, the first inlet and the third inlet are formed in a straight line in a circumferential direction of the flow path switching member, and the second outlet and the third outlet are formed in a straight line in the circumferential direction of the flow path switching member.

In addition, the flow path switching member has, on the outer peripheral surface thereof, a first groove part formed concavely inward around the first inlet and the third inlet, and a second groove part formed concavely inward around the second outlet and the third outlet, and a first sealing member is fitted into each of the first groove part and the second groove part.

In addition, the first sealing member is provided for sealing between the flow path switching member and the filter socket.

In addition, the first sealing member includes first and second O-rings formed on both sides in a closed-curve shape, and a pair of connection parts connecting both end portions of the first O-ring part to both end portions of the second O-ring part.

In addition, extension directions of the water introduction flow path and the water discharge flow path and an extension direction of the bypass flow path are perpendicular to each other.

In addition, the filter socket forms a cylindrical hollow part extending in the first direction to accommodate the flow path switching member.

In addition, the filter socket has the introduction port and the discharge port formed at the rear, and a filter coupling port formed at the front to which the filter head is coupled.

In addition, the filter socket is open on both sides and further includes an outer cover formed with side covers that cover the open both sides of the filter socket.

In addition, the outer cover further includes an upper cover configured to connect the side cover and to cover the upper side of the filter socket.

In addition, the water treatment apparatus further includes a connection member coupled to the flow path switching member to connect the first outlet and the second inlet of the flow path switching member with the water introduction pipe and the water discharge pipe of the filter head.

In addition, the connection member forms a first connection port and a second connection port into which the water introduction pipe and the water discharge pipe are fitted.

In addition, the flow path switching member may be provided with a coupling groove, and the connecting member may be provided with a coupling protrusion that is inserted into the coupling groove.

In addition, the flow path switching member may be provided with a coupling protrusion, and the connecting member may be provided with a coupling groove into which the coupling protrusion is fitted.

In addition, a second sealing member may be fitted between the first connection port and the second connection port and the first outlet and the second inlet for sealing purposes, the water introduction pipe may pass through the first connection port, the second sealing member, and the first outlet.

In addition, the water discharge pipe passes through the second connection port, the second sealing member, and the second inlet.

In addition, the connection member has a seating groove formed concavely inwardly on the surface where the water introduction pipe and the water discharge pipe are fitted, and the filter head has a seating protrusion formed therein to fit into the seating groove.

In addition, the seating groove may be formed with different inclinations on the first side and the second side facing each other, and the third and fourth sides of the seating protrusion may be formed with different inclinations, corresponding to the first and second sides of the seating groove.

In addition, the seating groove may be formed with different angles between the upper surface and the first side surface, and between the upper surface and the second side surface.

In addition, the shortest distance between the center of the first and second connection ports and the first side and the shortest distance between the second side may be formed differently.

In addition, the filter socket may have a curved inner surface, and the connection member may have a surface that contacts the filter socket as a curved surface.

In addition, the filter socket may have a curved inner surface, and the filter head may have a surface that contacts the filter socket as a curved surface.

In addition, the filter socket may include a filter coupling port into which the filter head is inserted, and the filter head may form a seating protrusion extending to both sides.

In addition, the filter coupling port may have an upper width formed larger than the first direction length of the seating protrusion, and a lower width formed smaller than the first direction length of the seating protrusion.

In addition, the seating protrusion can rotate while passing through the filter coupling port and contacting the inner surface of the filter socket.

In addition, the water treatment apparatus may further include a fixed cover having a ring shape with one side open and covering an outer peripheral surface of the filter head.

In addition, at least one fixing hook may be formed on an inner peripheral surface of the fixing cover, and a hook groove into which the fixing hook is inserted may be formed in the filter head.

### [Advantageous Effect]

According to the present disclosure, when installing a filter, the filter can be installed simply by fitting the filter head into the filter socket and rotating the filter downward or to one side, so that installation and replacement of the filter are easy, and the user can install and replace the filter directly.

In addition, when separating the filter, the filter can be separated by simply rotating the filter head upward or to the other side and removing the filter head from the filter socket, making separation and replacement of the filter easy, and the user can separate and replace the filter directly.

Above all, when the filter is separated, the flow path inside the filter socket is switched to a bypass mode, so that water introduced into the introduction port of the filter socket flows through the bypass flow path and out the discharge port of the filter socket, which has the advantage of preventing water leakage.

In addition, when the filter is installed in this state, the flow path inside the filter socket is automatically switched to the purification mode, so that water introduced into the introduction port of the filter socket passes through the filter and then is discharged through the discharge port of the filter socket, which has the advantage of producing purified water.

Furthermore, according to the present disclosure, the area of the filter flow path exposed to the outside can be minimized during filter storage or filter replacement. Furthermore, by reducing the area of the filter flow path exposed to the outside, external foreign substances are prevented from being introduced the inside of the filter, resulting in the advantage of preventing contamination of the filter.

In addition, the volume of the filter flow path exposed to the outside can be reduced, minimizing the amount of water remaining in the filter flow path, thereby minimizing the occurrence of water stains, sedimentation, or the like.

In addition, according to the present disclosure, since the fixed cover covers the outside of the filter head without shaking when the filter head and the filter cap are coupled, the area of the filter head exposed to the outside is minimized, and the state where the filter head and the filter cap are coupled can be firmly maintained.

In addition, during the process of storing and moving the filter, removal of the filter head and filter cap can be prevented, and during the process of using the filter, removal of the filter head and filter cap can be prevented, thereby preventing problems such as leakage.

Additionally, it is impossible to insert the filter in the opposite direction, which has the effect of preventing the situation where the filter is accidentally inserted in the opposite direction.

### [Description of Drawings]

FIG. 1 is a perspective view illustrating a water treatment apparatus according to one embodiment of the present disclosure.
FIG. 2 is a perspective view illustrating a state where the position of the water discharge nozzle of the water treatment apparatus has been changed, in FIG. 1.
FIG. 3 is a perspective view illustrating a state where the fixed cover and top cover are separated, in FIG. 1.
FIG. 4 is a perspective view illustrating a state where the fixed cover is rotated to one side, in FIG. 1.
FIG. 5 is a perspective view illustrating the fixed cover in FIG. 1 rotated to the other side.
FIG. 6 is a drawing illustrating a state where the front panel is separated, in FIG. 1.
FIG. 7 is a perspective view illustrating a state where the filter and filter socket, which are components of the present disclosure, are separated.
FIG. 8 is a perspective view illustrating a state where a filter and a filter socket, which are components of the present disclosure, are coupled.
FIG. 9 is a front view illustrating a state where the filter socket and filter head, which are components of the present disclosure, are separated.
FIGS. 10 and 11 are longitudinal-sectional views illustrating a state where the filter and filter socket are coupled in the first state.
FIG. 12 is a front view illustrating a state where the filter and filter socket are coupled in the second state.
FIGS. 13 and 14 are longitudinal-sectional views illustrating a state where the filter and filter socket are coupled in the second state.
FIG. 15 is a perspective view illustrating a flow path switching member, which is a component of the present disclosure.
FIG. 16 is a rear view illustrating the flow path switching member.
FIG. 17 is a perspective view illustrating a filter socket, which is a component of the present disclosure.
FIG. 18 is a front view illustrating the filter socket.
FIG. 19 is a perspective view illustrating an outer cover, which is a component of the present disclosure.
FIG. 20 is a side view illustrating the outer cover.
FIG. 21 is a front view illustrating the outer cover.
FIG. 22 is a perspective view illustrating a connection member, which is a component of the present disclosure.
FIG. 23 is a side view illustrating the connection member.
FIG. 24 is a bottom view illustrating the connection member.
FIG. 25 is a front view illustrating a state where a filter cap and a filter head, which are components of the present disclosure, are coupled.
FIG. 26 is a plan view illustrating a fixed cover, which is a component of the present disclosure.
FIG. 27 is a perspective view illustrating the fixed cover.
FIG. 28 is a cross-sectional view illustrating a state where the fixed cover is coupled with the filter head and filter cap.

### [Best Mode]

Hereinafter, specific embodiments of the present disclosure will be described in detail with reference to the drawings. However, the idea of the present disclosure is not limited to the embodiments presented below, and those skilled in the art who understand the idea of the present disclosure will be able to easily implement other embodiments within the scope of the same idea by adding, modifying, deleting, or adding components, and such embodiments will also be considered to be within the scope of the idea of the present disclosure.

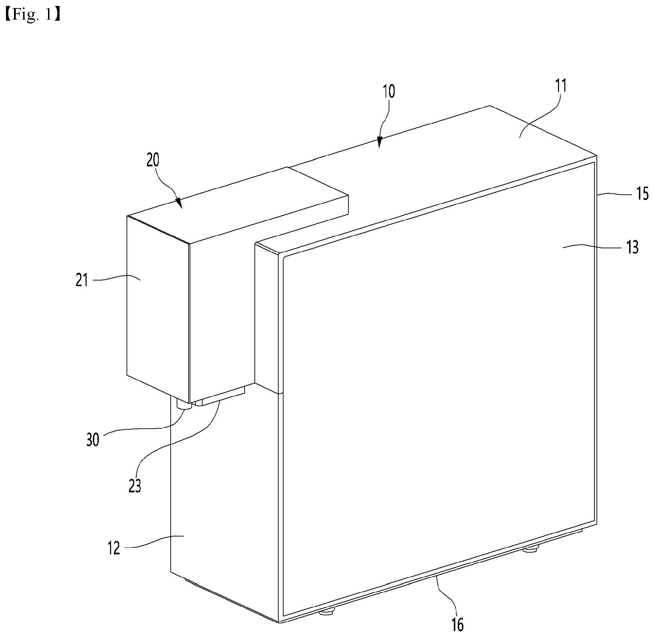

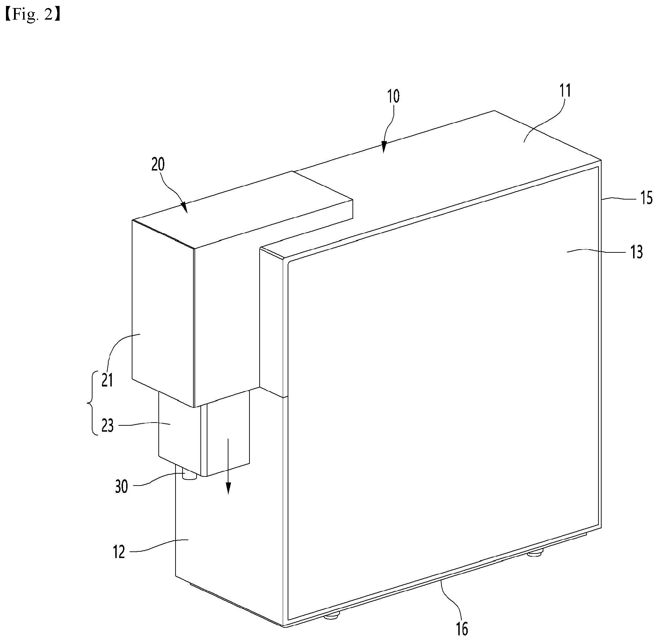

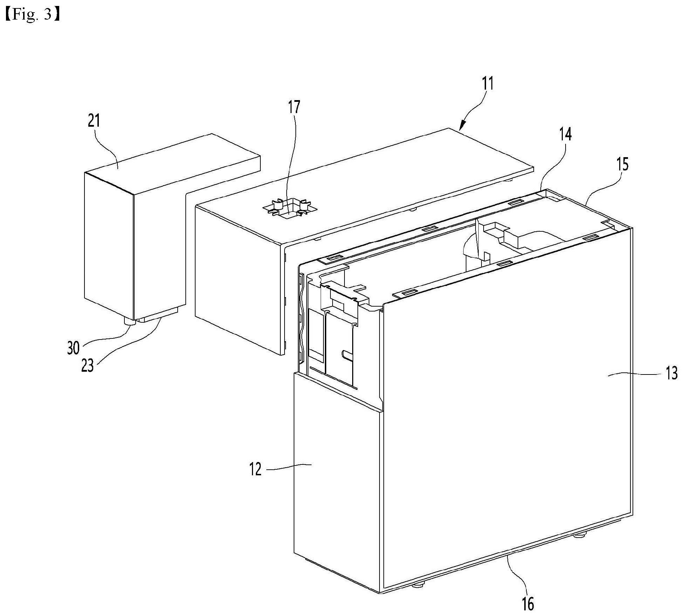

FIG. 1 is a perspective view illustrating a water treatment apparatus according to one embodiment of the present disclosure. In addition, FIG. 2 is a perspective view illustrating a state where the position of the water discharge nozzle of the water treatment apparatus has been changed, in FIG. 1. In addition, FIG. 3 is a perspective view illustrating a state where the fixed cover and top cover are separated, in FIG. 1.

The water treatment apparatus according to the present disclosure is intended to purify water supplied from an external water source and then immediately extract it, or to extract it after cooling or heating it, and may refer to, for example, a direct-flow water purifier.

Here, a direct-flow water purifier refers to a water purifier that does not have a reservoir for storing purified water, but rather a type in which water passes through a filter in real time and purified water is extracted when the user requests purified water extraction.

In addition, the water treatment apparatus according to the present disclosure may refer to a refrigerator having a water purification function. In other words, it may refer to a water purifier refrigerator that is a refrigerator and has a filter for purifying raw water and a water discharge nozzle through which purified water is discharged.

In addition, the water treatment apparatus according to the present disclosure may mean an under-sink type water purifier in which the main body is installed under the sink and the water discharge nozzle is installed on the outside of the sink.

In addition, the water treatment apparatus according to the present disclosure may refer to various types of known apparatus that receive water from a water source, purify it by passing it through a filter, and then supply it to the outside.

Referring to FIGS. 1 to 3, a water treatment apparatus according to one embodiment of the present disclosure includes a main body 10 and a water discharge module 20 coupled to the main body 10 and having a water discharge nozzle 30 mounted at the lower end.

The water discharge module 20 may include a fixed cover 21 and a water discharge nozzle 30. The water discharge module 20 may include a fixed cover 21, an elevating cover 23, and a water discharge nozzle 30.

In addition, the water discharge module 20 may be provided with an elevation structure to adjust the height of the water discharge nozzle 30.

In addition, the water discharge module 20 may be coupled to protrude to the front surface of the main body 10. In addition, the water discharge module 20 may be coupled to protrude to either the left side or the right side of the main body 10.

The water discharge module 20 can be coupled to the upper surface of the main body 10. In addition, the water discharge pipe, the electric wire, or the like, which extends from the inside of the main body 10 and pass through the internal space of the water discharge module 20 and are connected to the water discharge nozzle 30, pass through the opening 17 formed on the upper surface of the main body 10.

The water discharge module 20 can be separably and detachably coupled to the upper surface of the main body 10, and the water discharge module 20 can cover the opening 17.

When the opening 17 is formed on the upper surface of the main body 10 as described above, even when the water discharge module 20 is installed to protrude toward the front of the main body 10 or to protrude toward the side of the main body 10, the front surface or side of the main body 10 is maintained smooth, so that the water treatment apparatus has the advantage of looking clean.

First, the main body 10 may include a top cover 11 forming the upper surface, a front panel 12 forming the front surface, first and second side panels 13, 14 forming both sides, a rear panel 15 forming the rear surface, and a base 16 forming the bottom surface.

Additionally, a filter is disposed inside the main body 10 to introduce water from the outside and filter it into purified water.

On the inside of the main body 10, a filter accommodation groove 18 in which the filter is accommodated is formed concavely toward the rear at a position adjacent to the front panel 12.

In addition, a filter bracket 19 on which a filter is seated is disposed in the filter accommodation groove 18, and a filter socket 100 is mounted on the upper end or the lower end of the filter bracket 19.

Therefore, when the user detaches the front panel 12, the filter accommodation groove 18 and the filter 40 disposed in the filter accommodation groove 18 can be exposed to the outside.

In addition, purified water that has passed through the filter 40 can be supplied to the user through the water discharge nozzle 30. A purified water flow path that guides purified water that has passed through the filter 40 toward the water discharge nozzle 30 can be disposed inside the main body 10.

In addition, purified water passing through the filter 40 can be supplied to the water discharge nozzle 30 in the form of cold water or hot water after being cooled or heated.

To this end, a hot water tank that heats purified water that has passed through the filter 40 and a hot water flow path that guides the heated hot water in the hot water tank toward the water discharge nozzle 30 may be disposed inside the main body 10. For example, the hot water tank can generate hot water by instantaneously heating purified water that has passed through the hot water tank using an induction heating (IH) method.

In addition, the hot water tank may be equipped with a thermoelectric element or a heating wire to heat purified water passing through the hot water tank into hot water.

In addition, instead of the induction heating method, various heating methods can be applied within the range where purified water passing through the hot water tank can be heated into hot water.

In addition, a cooling tank for cooling purified water passing through the filter and a cold water flow path for guiding the cold water cooled in the cooling tank toward the water discharge nozzle 30 may be disposed inside the main body 10. For example, the cooling tank may be equipped with a compressor, an evaporator, a condenser, a cooling fan, or the like, so that purified water passing through the cooling tank can be cooled with cold water. In addition, the cooling tank may be equipped with a thermoelectric element, so that purified water passing through the cooling tank can be cooled with cold water.

In addition, instead of the evaporator, various cooling devices can be applied within the range of being able to cool the purified water passing through the cooling tank with cold water.

In the present disclosure, the height of the water discharge nozzle 30 is variable.

In order to change the height of the water discharge nozzle 30 as described above, the elevating cover 23 can be connected to the fixed cover 21 to perform an elevating operation.

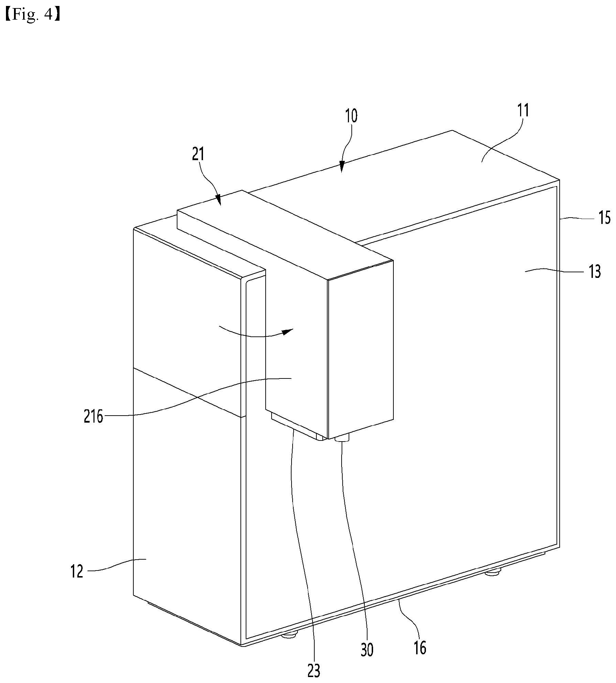

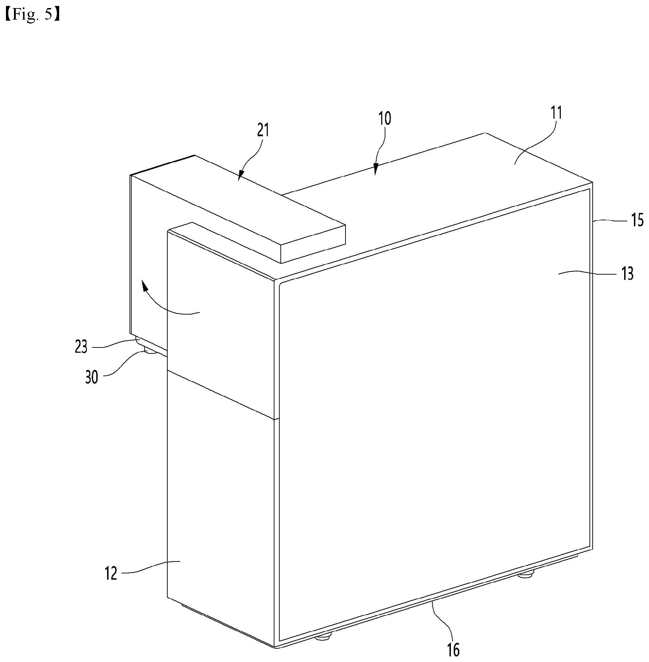

FIG. 4 is a perspective view illustrating a state where the fixed cover is rotated to one side, in FIG. 1. In addition, FIG. 5 is a perspective view illustrating the fixed cover in FIG. 1 rotated to the other side.

Referring to FIGS. 4 and 5, in the present disclosure, the horizontal position of the water discharge nozzle 30 can be changed. In detail, the horizontal positions of the fixed cover 21, the elevating cover 23, and the water discharge nozzle 30 can also be changed.

For example, the horizontal position of the water discharge nozzle 30 can be changed at 90° intervals.

Referring to FIGS. 4 and 5, the fixed cover 21, the elevating cover 23, and the water discharge nozzle 30 may be installed facing one side rather than the front surface, or may be installed facing the other side.

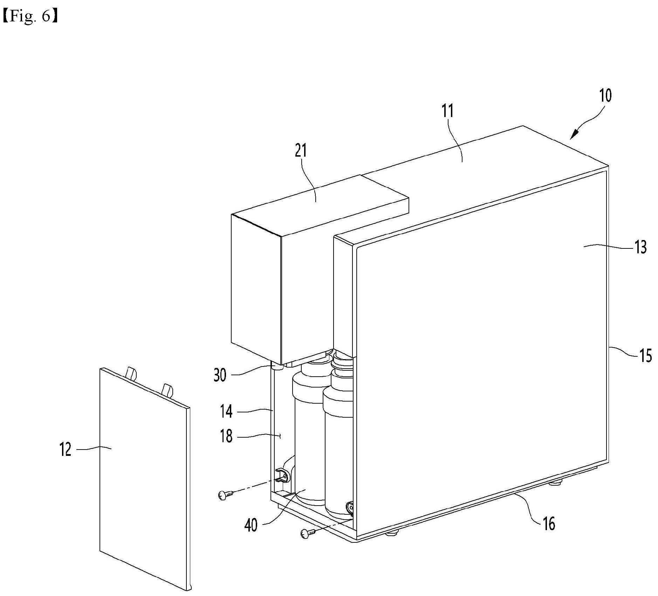

FIG. 6 is a drawing illustrating a state where the front panel is separated, in FIG. 1.

Referring to FIG. 6, the water treatment apparatus of the present disclosure has a filter 40 disposed inside the main body 10.

In addition, when the front panel 12 is separated from the main body 10, the filter 40 is exposed to the outside of the front.

Therefore, when replacing the filter 40, the front panel 12 can be opened, the filter 40 can be separated, and then installed.

In the following description, the filter 40 may mean a state where the filter housing 200 and the filter head 300 are coupled.

Below, the structure of the filter 40 and the installation structure of the filter 40 are described.

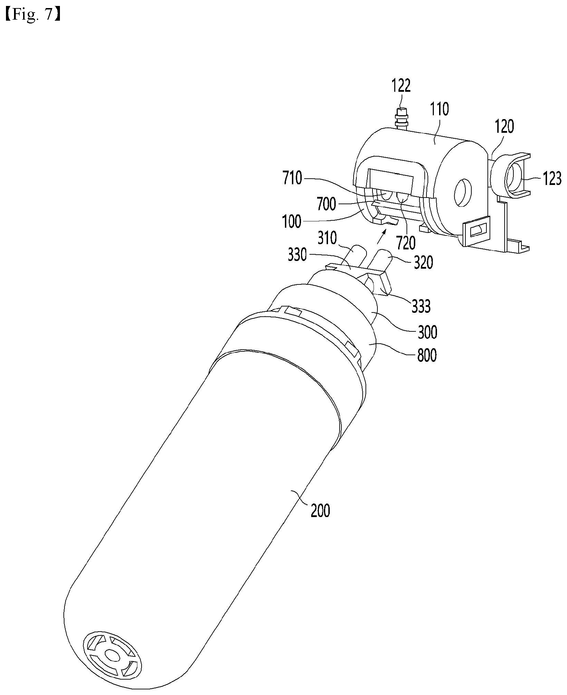

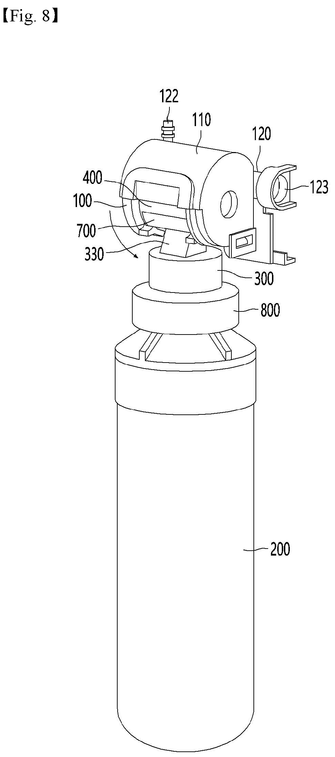

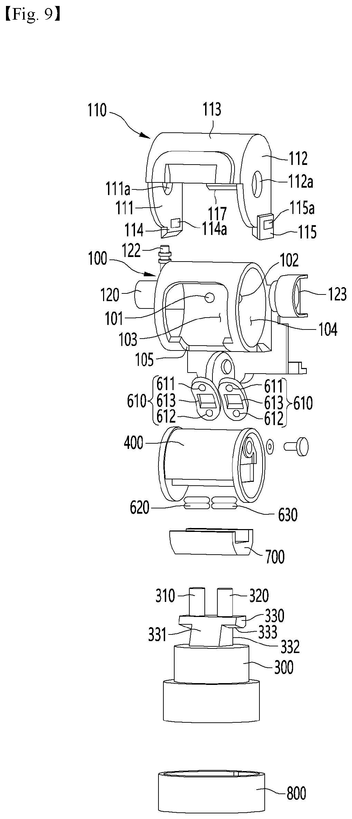

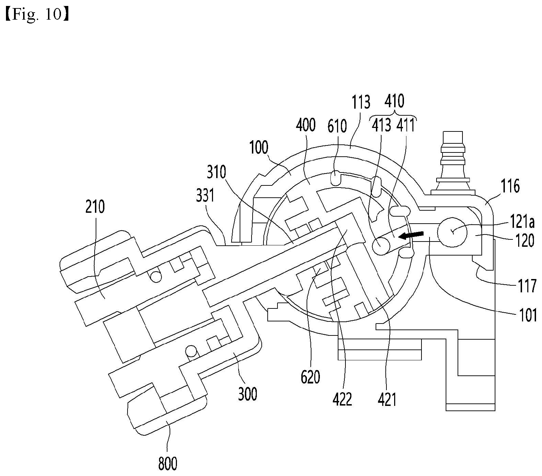

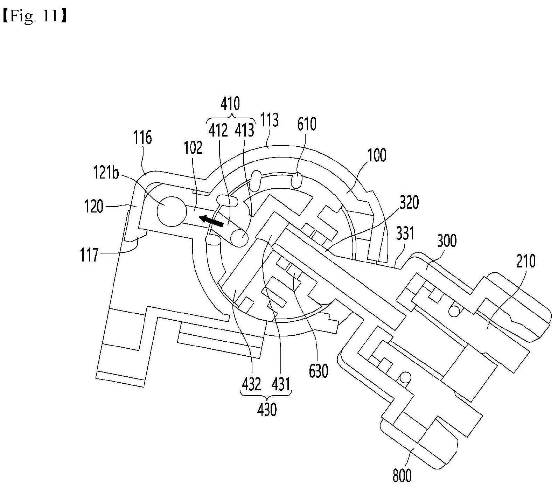

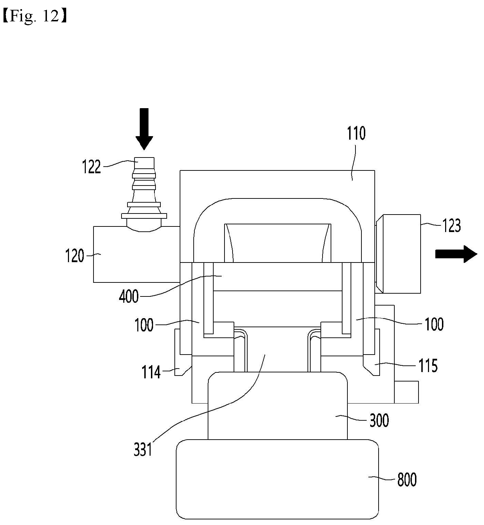

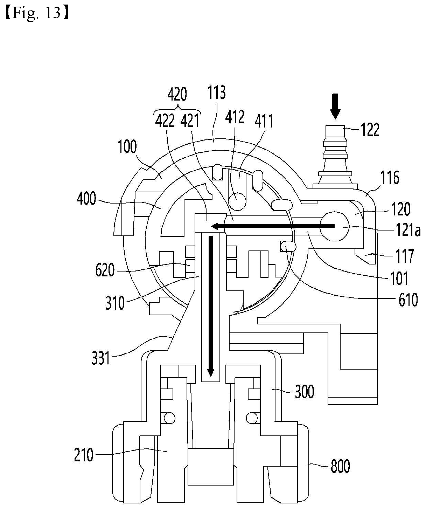

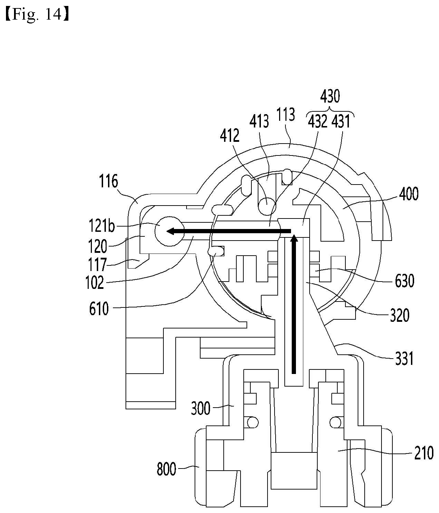

FIG. 7 is a perspective view illustrating a state where the filter and filter socket, which are components of the present disclosure, are separated. FIG. 8 is a perspective view illustrating a state where a filter and a filter socket, which are components of the present disclosure, are coupled. FIG. 9 is a front view illustrating a state where the filter socket and filter head, which are components of the present disclosure, are separated. FIGS. 10 and 11 are longitudinal-sectional views illustrating a state where the filter and filter socket are coupled in the first state. FIG. 12 is a front view illustrating a state where the filter and filter socket are coupled in the second state. FIGS. 13 and 14 are longitudinal-sectional views illustrating a state where the filter and filter socket are coupled in the second state.

Referring to FIGS. 7 to 14, a water treatment apparatus according to one embodiment of the present disclosure includes a filter socket 100 having an introduction port 101 for introducing water on one side and a discharge port 102 for discharging water on the other side based on a first direction (left and right direction based on the drawing), a filter housing 200 forming a filtration space 201 on the inside thereof, a filter head 300 coupled to an open upper side of the filter housing 200, and a cylindrical flow path switching member 400 accommodated between the introduction port 101 and the discharge port 102 of the filter socket 100, coupled to the filter head 300 in a second direction intersecting the first direction, and rotating about the first direction as an axis.

The flow path switching member 400 may include a bypass flow path 410 that guides water introduced into the introduction port 101 to the discharge port 102 in a first state where the filter head 300 is coupled, a water introduction flow path 420 that guides water introducing into the introduction port 101 toward the filter head 300 and filter housing 200 in a second state rotated by a predetermined angle based on the first state, and a water discharge flow path 430 that guides water in the filter housing 200 and filter head 300 toward the discharge port 102.

The filter housing 200 and the filter head 300 are coupled. In addition, the filter housing 200 and the filter head 300 move together.

For reference, the filter head 300 and the filter housing 200 or the filter head 300 and the filter cap 210 may be formed integrally.

Additionally, the filter head 300 and the filter housing 200 or the filter head 300 and the filter cap 210 may be detachably coupled.

The first state is a state where the filter head 300 is fitted into the filter socket 100. In detail, the flow path switching member 400 and the filter head 300 are coupled. In this state, the flow path switching member 400 and the filter head 300 move together.

The flow path switching member 400 can be assembled and coupled to the filter socket 100. In addition, the flow path switching member 400 can have a cylindrical shape with the first direction as the central axis. The flow path switching member 400 can rotate about the first direction (left and right direction based on the drawing) as an axis in the internal space of the filter socket 100.

For example, the flow path switching member 400 can rotate about the first direction (left and right direction based on the drawing) as an axis to a side and then rotate in the other direction.

For example, the flow path switching member 400 can rotate downwards about the first direction (left and right direction based on the drawing) as an axis and then rotate upwards again.

In addition, when the filter head 300 is coupled to the flow path switching member 400, the filter head 300 and the filter housing 200 rotate together with the flow path switching member 400.

When the filter housing 200 is rotated while the filter head 300 is coupled to the flow path switching member 400, the filter head 300 and the flow path switching member 400 rotate together. At this time, The filter socket 100 can be maintained in a fixed state.

In other words, the filter socket 100 is a fixed body, and the filter housing 200, filter head 300, and flow path switching member 400 can be understood as rotating bodies.

In detail, when the filter head 300 is fitted into the filter socket 100 in a state where the filter socket 100 is not coupled to the filter head 300, the first state (state of FIG. 10) is achieved.

In this first state, water introduced into the introduction port 101 does not flow toward the filter head 300 and filter housing 200, but passes through the bypass flow path 410 and is discharged directly to the discharge port 102.

In other words, in the first state, the introduction port 101 and the discharge port 102 are communicated with both end portions of the bypass flow path 410, so that water introduced into the introduction port 101 flows out through the discharge port 102 without going through a filtration process.

At this time, water passing through the bypass flow path 410 may flow toward the water discharge nozzle. In addition, since water passing through the bypass flow path 410 has not passed through the filter, the water may not be supplied to the water discharge nozzle but may be drained through a separate pipe.

In addition, when the filter housing 200 is rotated to one side (or lower side) in the first state where the filter head 300 is inserted into the filter coupling port 103, the filter head 300 and the flow path switching member 400 rotate together with the filter housing 200 and switch to the second state (state of FIG. 13). At this time, the filter socket 100 remains fixed.

In this second state, water introduced into the introduction port 101 flows toward the filter head 300 and filter housing 200 through the water introduction flow path 420.

In addition, the water is purified while passing through a filter material such as a carbon block accommodated inside the filter housing 200.

In addition, purified water (purified water) inside the filter housing 200 is discharged to the outside through the filter head 300, and water discharged from the filter head 300 is discharged to the discharge port 102 through the water discharge flow path 430.

In other words, based on the first state, in the second state where the filter head 300 and the flow path switching member 400 together with the filter housing 200 are rotated downward, water flowing into the introduction port 101 flows into the filter housing 200 through the water introduction flow path 420, undergoes a filtration process, and is then discharged to the discharge port 102 through the water discharge flow path 430.

At this time, the water that has passed through the water introduction flow path 420, filter, and water discharge flow path 430 is in a purified state, so it can be supplied to the water discharge nozzle.

As a reference, immediately after replacing the filter, the water that washes the filter while passing through the filter may not be supplied to the water discharge nozzle, but may be drained through a separate pipe.

In addition, once the drainage of the water that washed the filter is complete, the purified water produced thereafter can be supplied to the water discharge nozzle.

In addition, in the second state as described above, when the filter head 300 and the flow path switching member 400 together with the filter housing 200 rotate upward, the first state is reached, and in this first state, the introduction port 101 and the discharge port 102 are communicated with both end portions of the bypass flow path 410, and water is discharged to the introduction port 101 or the discharge port 102.

In addition, even if the user separates the filter head 300 from the flow path switching member 400, no leakage occurs. Therefore, after switching to the first state as described above, the filter can be separated or replaced.

In addition, in one embodiment of the present disclosure, the filter head 300 includes a water introduction pipe 310 extending in a second direction intersecting the first direction and communicating with the water introduction flow path 420, and a water discharge pipe 320 formed parallel to the water introduction pipe 310 and communicating with the water discharge flow path 430.

In other words, the filter head 300 may be provided in a nipple type.

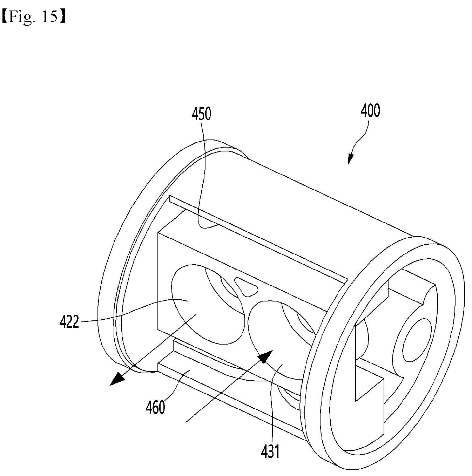

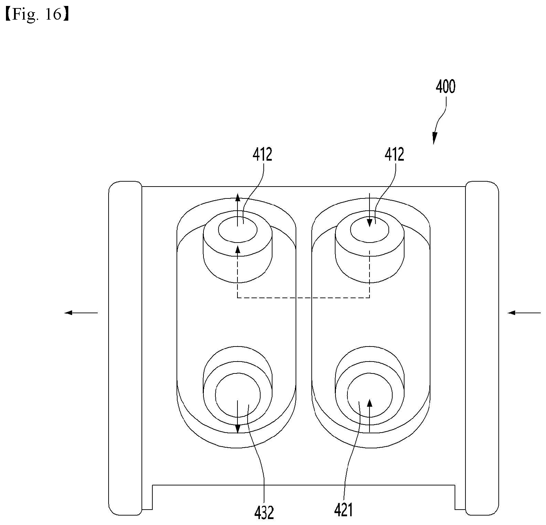

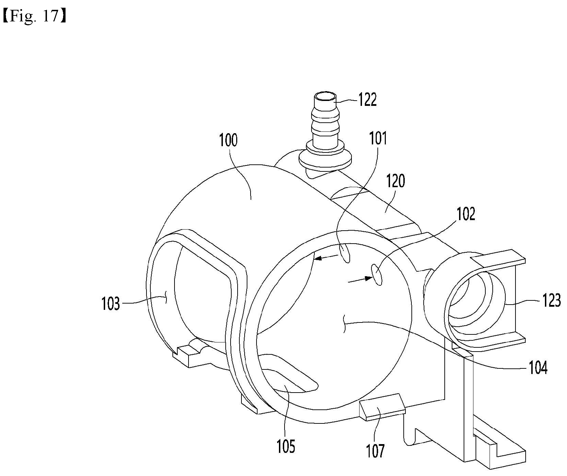

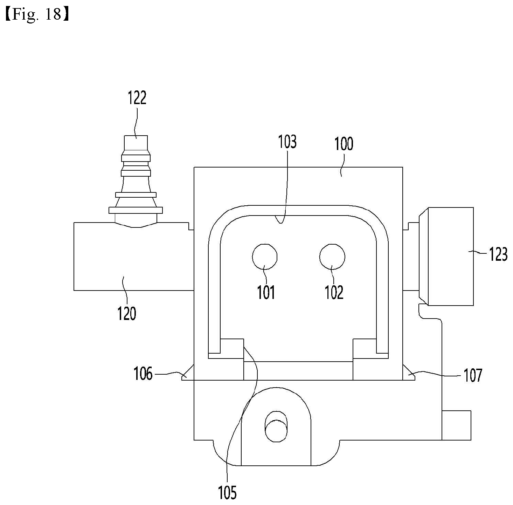

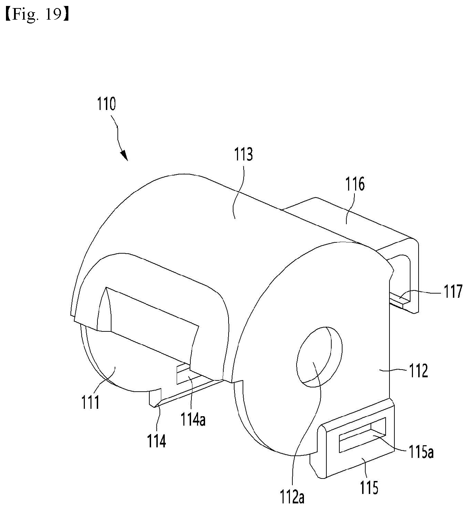

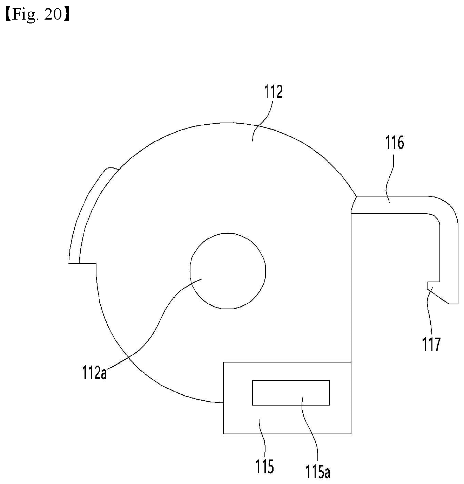

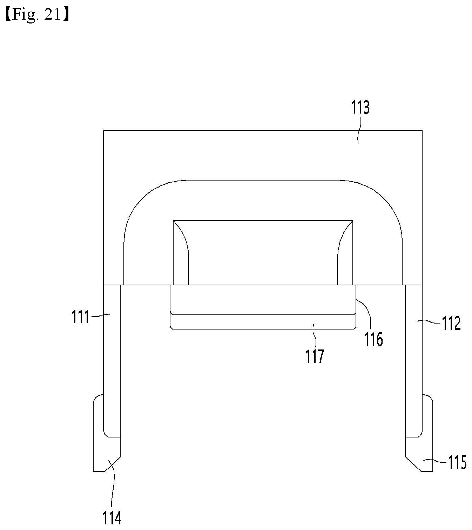

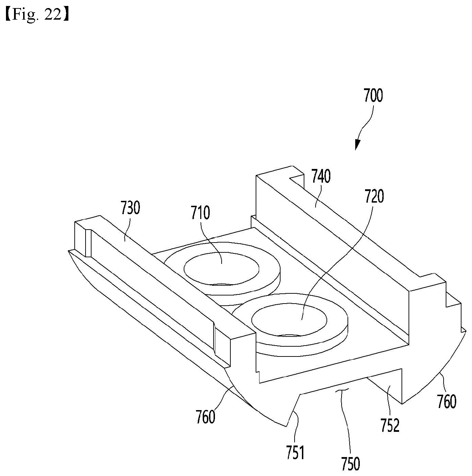

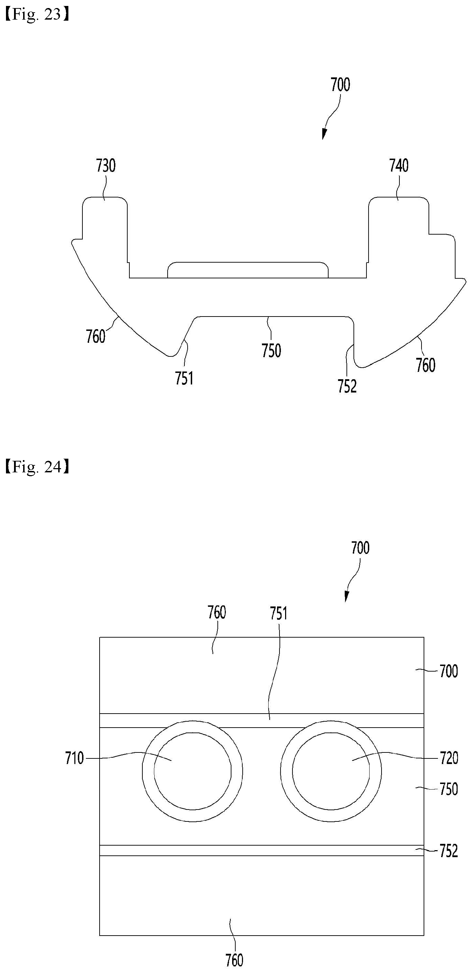

FIG. 15 is a perspective view illustrating a flow path switching member, which is a component of the present disclosure. FIG. 16 is a rear view illustrating the flow path switching member. FIG. 17 is a perspective view illustrating a filter socket, which is a component of the present disclosure. FIG. 18 is a front view illustrating the filter socket. FIG. 19 is a perspective view illustrating an outer cover, which is a component of the present disclosure. FIG. 20 is a side view illustrating the outer cover. FIG. 21 is a front view illustrating the outer cover. FIG. 22 is a perspective view illustrating a connection member, which is a component of the present disclosure. FIG. 23 is a side view illustrating the connection member. FIG. 24 is a bottom view illustrating the connection member.

Referring to the drawing, the water introduction flow path 420 may, in the second state, include a first inlet 421 communicating with the introduction port 101 and a first outlet 422 communicating with the water introduction pipe 310.

The water introduction flow path 420 refers to a flow path that guides water introduced into the introduction port 101 of the filter socket 100 to the filter side in the second state.

For reference, in the first state, the introduction port 101 of the filter socket 100 and the water introduction flow path 420 are not communicated with each other, so the water supplied to the introduction port 101 of the filter socket 100 does not flow into the water introduction flow path 101.

The first inlet 421 and the first outlet 422 may be formed in directions intersecting each other. For example, the first inlet 421 may extend in a first direction, and the first outlet 422 may extend in a second direction perpendicular to the first direction.

Referring to the drawing, the first inlet 421 may be formed to extend in the front and rear direction and allow water to introduce in from the rear. In addition, the first outlet 422 may be formed to extend in the vertical direction and allow water to discharge downward.

Accordingly, water can flow in from the rear to the front through the first inlet 421, and then be discharged from the top to the bottom through the first outlet 422.

For example, the water introduction flow path 420 may have a '¬' or 'T' shape.

At least part of the water introduction flow path 420 may be formed in a straight or curved shape.

The water introduction flow path 420 may have a shape in which at least a portion is bent.

In addition, the water discharge flow path 430 may, in the second state, include a second inlet 431 communicating with the water discharge pipe 320 and a second outlet 432 communicating with the discharge port 102.

The water discharge flow path 430 refers to a flow path that guides the filtered water passing through the filter to the discharge port 102 of the filter socket 100 in the second state.

For reference, in the first state, the discharge port 102 of the filter socket 100 and the water discharge flow path 430 are not communicated with each other, so water does not flow into the water discharge flow path 430.

The second inlet 431 and the second outlet 432 may be formed in a direction that intersects each other.

For example, the second outlet 432 may extend in the first direction, and the second inlet 431 may extend in the second direction perpendicular to the first direction.

Referring to the drawing, the second outlet 432 may be formed to extend in the front and rear direction and discharge water to the rear. In addition, the second inlet 431 may be formed to extend in the vertical direction and allow water to introduce from the lower side.

Therefore, water can be introduced from the lower portion to the upper side through the second inlet 431, and then be discharged to the rear through the second outlet 432.

For example, the water discharge flow path 430 may have a '¬' or 'T' shape.

At least a portion of the water discharge flow path 430 may be formed in a straight or curved shape.

The water discharge flow path 430 may have a shape in which at least a portion is bent.

In addition, the first inlet 421 and the second outlet 432 may be formed parallel to each other while being spaced apart in the first direction, and the first outlet 422 and the second inlet 431 may also be formed parallel to each other while being spaced apart in the first direction.

In addition, the first inlet 421 and the second outlet 432 may be positioned in a straight line in the first direction, and the first outlet 422 and the second inlet 431 may also be positioned in a straight line in the first direction.

The extension direction of the water introduction flow path 420 and water discharge flow path 430 and the extension direction of the bypass flow path 410 may at least partially intersect vertically.

The bypass flow path 410 may, in the first state, include a third inlet 411 communicating with the introduction port 101 and a third outlet 412 communicating with the discharge port 102.

In addition, between the third inlet 411 and the third outlet 412, an intermediate flow path 413 that extends in the first direction and bypasses the water introduction flow path 420 and water discharge flow path 430 can be formed.

At least a portion of the intermediate flow path 413 may be formed in a straight or curved shape.

Additionally, the first inlet 421 and the third inlet 411 can be formed in a straight line in the circumferential direction of the flow path switching member 400.

In addition, the second outlet 432 and the third outlet 412 can be formed in a straight line in the circumferential direction of the flow path switching member 400.

The virtual line connecting the first inlet 421 and the third inlet 411 may be parallel to the virtual line connecting the centers of the second outlet 432 and the third outlet 412.

Water that is introduced into the inside of the flow path switching member 400 through the third inlet 411 flows in the first direction through the intermediate flow path 413 and is discharged to the outside of the flow path switching member 400 through the third outlet 412.

In addition, water that is introduced into the inside of the flow path switching member 400 through the first inlet 421 flows toward the filter side, and water that passes through the filter is discharged to the outside of the flow path switching member 400 through the third outlet 412.

As described above, when the first inlet 421, the third inlet 411, and the second outlet 432 and the third outlet 412 are formed, when the flow path switching member 400 is rotated about the first direction as an axis, the flow path communicating with the introduction port 101 and the discharge port 102 can be changed.

First, in the first state, the introduction port 101 communicates with the third inlet 411, and the discharge port 102 communicates with the third outlet 412. Therefore, the water in the introduction port 101 can flow to the discharge port 102 after passing through the bypass path 410 without passing through the filter.

For reference, in the first state, the introduction port 101 and discharge port 102 of the filter socket 100 are not communicated with the water introduction flow path 420 and water discharge flow path 430, respectively, so the water supplied to the introduction port 101 of the filter socket 100 does not flow to the water introduction flow path 420 and water discharge flow path 430.

On the other hand, in the second state, the introduction port 101 communicates with the first inlet 421, and the discharge port 102 communicates with the second outlet 432. Therefore, water from the introduction port 101 is introduced into the filter through the water introduction flow path 420, and is filtered while passing through the filter. Then, the filtered water flows into the discharge port 102 through the water discharge flow path 430. Then, water that has passed through the discharge port 102 flows toward the water discharge nozzle, and the user can receive purified water.

For reference, in the second state, the introduction port 101 and discharge port 102 of the filter socket 100 are not communicated with the bypass flow path 410, so water supplied to the introduction port 101 of the filter socket 100 does not flow to the bypass flow path 410.

As the Flow path conversion member 400 rotates as described above, when the Flow path communicating with the introduction port 101 and discharge port 102 changes, it is necessary to block water leakage.

For example, in a situation where water is introduced into the introduction port 101, it is necessary to block water leakage when switching from the first state or the second state or from the first state to the second state, or from the second state to the first state.

For this purpose, a separate first sealing member 610 is provided for sealing between the flow path switching member 400 and the filter socket 100.

In addition, the flow path switching member 400 may have a first groove part 441 formed concavely inwardly around the first inlet 421 and the third inlet 411 on the outer peripheral surface, and a second groove part 442 formed concavely inwardly around the second outlet 432 and the third outlet 412. In addition, the first sealing member 610 may be inserted into and fixed in the first groove part 441 and the second groove part 442, respectively.

The first sealing member 610 may be formed so that at least a portion thereof protrudes beyond the outer surface of the flow path switching member 400 while being inserted into the first groove part 441 and the second groove part 442, respectively.

The first sealing member 610 may include a first O-ring part 611 and a second O-ring part 612 formed in a closed curve shape on both sides, and a pair of connection parts 613 connecting both end portions of the first O-ring part 611 and both end portions of the second O-ring part 612.

The first O-ring part 611 and the second O-ring part 612 may be formed to surround the periphery of the third inlet 411 and the first inlet 421, respectively.

Additionally, the first O-ring part 611 and the second O-ring part 612 may be formed to surround the third outlet 412 and the second outlet 432, respectively.

In this embodiment, the third inlet 411 and the first inlet 421 each have the shape of a hollow tube, and the first O-ring part 611 and the second O-ring part 612 can be formed to surround the third inlet 411 and the first inlet 421 in the shape of a hollow tube.

In addition, the third outlet 412 and the second outlet 432 also each have the shape of a hollow tube, and the first O-ring part 611 and the second O-ring part 612 can be formed to surround the third outlet 412 and the second outlet 432 in the shape of a hollow tube.

Therefore, in the first state, the first O-ring part 611 is disposed between the third inlet 411 and the introduction port 101, and between the third outlet 412 and the discharge port 102, thereby preventing leakage of water flowing from the introduction port 101 to the third inlet 411, and water flowing from the third outlet 412 to the discharge port 102.

In addition, in the second state, the second O-ring part 612 is disposed between the first inlet 421 and the introduction port 101, and between the second outlet 432 and the discharge port 102, thereby preventing leakage of water flowing from the introduction port 101 to the first inlet 421, and water flowing from the second outlet 432 to the discharge port 102.

In addition, in the process of switching from the first state to the second state or in the process of switching from the second state to the first state, leakage of water flowing from the introduction port 101 toward the flow path switching member 400 by the connection part 613 can be prevented, and leakage of water flowing from the third outlet 412 or the second outlet 432 toward the discharge port 102 can be prevented.

In the first state as well as the second state, the first sealing member 610 is inserted into the first groove part 441 and the second groove part 442 on one side, respectively, and the other side maintains contact with the inner surface of the filter socket 100. In particular, even when the flow path switching member 400 rotates, that is, when it switches from the first state to the second state or from the second state to the first state, the first sealing member 610 can maintain contact with the inner surface of the filter socket 100.

The filter socket 100 forms a cylindrical hollow part 104 extending in the first direction to accommodate the flow path switching member 400.

In addition, the filter socket 100 is open on both sides, and the hollow part 104 is formed to penetrate the filter socket 100.

In addition, the filter socket 100 forms a filter coupling port 103 on the front surface where the filter head 300 is coupled. The filter coupling port 103 communicates with the hollow part 104.

Accordingly, the filter head 300 can be coupled with the flow path switching member 400 accommodated in the hollow part 104 through the filter coupling port 103.

The filter coupling port 103 may have a mounting groove 105 formed at the lower end with a narrow width.

The mounting groove 105 can be understood as a structure for fixing the filter head 300.

In other words, the filter socket 100 has the introduction port 101 and discharge port 102 formed at the rear, a filter coupling port 103 formed at the front to which the filter head 300 is coupled, and the filter coupling port 103 may have a mounting groove 105 formed at the lower end with a narrowed width.

The width of the filter coupling port 103 in the first direction can be formed to be larger than the width of the first direction of the mounting groove 105.

The mounting groove 105 may also be provided to communicate with the hollow part 104.

The mounting groove 105 and filter coupling port 103 can also be communicated with each other.

The filter coupling port 103 and the mounting groove 105 can be formed in succession along the circumference of the filter socket 100.

The filter coupling port 103 and the mounting groove 105 can be formed at the same position in the center of the first direction.

The filter coupling port 103 and the mounting groove 105 can be formed at the same position in the first direction as the center of the first direction of the filter socket 100.

In addition, the filter socket 100 may further include an outer cover 110 having open both sides and side covers 111, 112 formed to cover the open both sides of the filter socket 100.

In other words, the outer cover 110 is provided to cover the outer side of the filter socket 100.

A connection port 111a, 112a may be formed on each of the side covers 111, 112.

Each of the connection ports 111a, 112a can be connected to the rotation axis of the flow path switching member 400.

The outer cover 110 may further include an upper cover 113 that connects the side covers 111, 112 and covers the upper side of the filter socket 100.

The upper cover 113 can cover at least a portion of the filter coupling port103. The upper cover 113 can cover the upper side of the filter coupling port 103.

The upper cover 113 may extend in the first direction and have a convex shape toward the top. The upper cover 113 forms an extension protrusion 116 extending rearward at the rear end. The extension protrusion 116 has a fixing hook 117 extending downward formed at the end portion thereof.

The fixed hook 117 can be caught and restrained at the rear end of the filter socket 100.

For example, the filter socket 100 is formed with a main flow path part 120 that supplies water to the introduction port 101 at the rear end and receives water from the discharge port 102, and the main flow path part 120 is formed to be convex toward the rear, and the fixed hook 117 can be caught and restrained at the lower end of the main flow path part 120.

For reference, the main flow path part 120 may be provided as a hollow pipe.

The main flow path part 120 has a main flow path 121a, 121b formed on the inside.

The main flow path part 120 may have a partition formed on the inside to prevent water supplied to the introduction port 101 and water discharged from the discharge port 102 from mixing.

The main flow path 121a, 121b may include a first main flow path 121a disposed on one side of the partition and communicating with the introduction port 101, and a second main flow path 121b disposed on the other side of the partition and communicating with the discharge port 102.

The main flow path part 120 may form a water introduction pipe 122 extending vertically on one side and through which water is introduced, and a water discharge pipe 123 through which water is discharged on the other side.

The water introduction pipe 122 is communicated with the first main flow path 121a, and thus, water introduced into the water introduction pipe 122 flows through the first main flow path 121a and then is introduced into the introduction port 101.

In addition, the water discharged through the discharge port 102 can flow out through the second main flow path 121b to the water discharge part 123.

For reference, the introduction port 101 passes through the rear surface of the filter socket 100 and communicates with the first main flow path 121a.

In addition, the discharge port 102 also passes through the rear surface of the filter socket 100 and communicates with the second main flow path 121b.

The main flow path part 120 can be formed integrally with the filter socket 100.

The outer cover 110 has a fixing hook 114, 115 at the lower end of the side cover 111, 112, and the fixing hook 114, 115 is hooked and restrained at the lower end of both sides of the filter socket 100, so that the outer cover 110 can be fixed to the filter socket 100.

For example, the fixed hooks 114, 115 may each have long holes 114a, 115a formed therein, and the filter socket 100 may each have retaining protrusions 106, 107 formed at the lower ends on both sides to fit into the long holes 114a, 115a.

The fixed hooks 114, 115 and restraining protrusions 106, 107 may each have an inclined surface formed to facilitate fastening to each other.

In addition, a connection member 700 coupled to the flow path switching member 400 may be further included to connect the first outlet 422 and the second inlet 431 of the flow path switching member 400 with the water introduction pipe 310 and the water discharge pipe 320 of the filter head 300.

In addition, when the filter head 300 is coupled to the connection member 700 and the flow path switching member 400, the connection member 700 rotates together with the flow path switching member 400, the filter head 300, and the filter housing 200.

When the filter housing 200 is rotated while the filter head 300 is coupled to the connection member 700 and the flow path switching member 400, the filter head 300, the connection member 700, and the flow path switching member 400 rotate together. At this time, the filter socket 100 can remain fixed.

The connection member 700 can form a first connection port 710 and a second connection port 720 into which the water introduction pipe 310 and water discharge pipe 320 are fitted.

In addition, a concave coupling groove 450, 460 may be formed inwardly in the flow path switching member 400, and a coupling protrusion 730, 740 inserted into the coupling groove 450, 460 may be formed in the connection member 700.

A plurality of coupling grooves 450, 460 and a plurality of coupling protrusions 730, 740 inserted thereinto may each be provided.

The coupling groove 450, 460 and the inserted coupling protrusion 730, 740 can each extend in the first direction.

The coupling grooves 450, 460 and the inserted coupling protrusions 730, 740 can be spaced apart from each other in the circumferential direction of the flow path switching member 400.

In addition, the connection member 700 may have a concave coupling groove formed inward, and the flow path switching member 400 may have a coupling protrusion formed to be inserted into the coupling groove 450, 460 of the connection member 700.

In addition, a second sealing member 620, 630 for sealing may be fitted between the first outlet 422 and the first connection port 710, and between the second inlet 431 and the second connection port 720, respectively. In addition, the water introduction pipe 310 may pass through the first connection port 710 and then the second sealing member 620 to be coupled to the first outlet 422, and the water discharge pipe 320 may pass through the second connection port 720 and then the second sealing member 630 to be coupled to the second inlet 431.

As described above, the second sealing member 620, 630 can be fixed by the connection member 700, and the inner peripheral surface of the second sealing member 620, 630 comes into contact with the water introduction pipe 310 and the water discharge pipe 320, thereby preventing water leakage between the first outlet 422 and the water introduction pipe 310 and also preventing water leakage between the second inlet 431 and the water discharge pipe 320.

A plurality of second sealing members 620, 630 are each provided and can be disposed in a row in the direction in which the water introduction pipe 310 and water discharge pipe 320 are fitted.

In addition, the connection member 700 may form a seating groove 750 that is concavely formed inward on the surface into which the water introduction pipe 310 and water discharge pipe 320 are fitted, and the filter head 300 may have a seating protrusion 330 that is fitted into the seating groove 750.

The seating protrusion 330 can be formed on the lower side of the water introduction pipe 310 and the water discharge pipe 320.

The seating groove 750 may be formed so that the first side 751 and the second side 752 facing each other have different inclinations, and the seating protrusion 330 may be formed so that the third side 331 and the fourth side 332 have different inclinations corresponding to the first side 751 and the second side 752 of the seating groove 750.

For example, the angle between the upper surface of the seating groove 750 and the first side 751 may be formed as an obtuse angle, and the angle between the upper surface of the seating groove 750 and the second side 752 may be formed as a right angle.

In addition, the shortest distance between the center of the first connection port 710 and the second connection port 720 and the first side 751 may be formed differently from the shortest distance between the center of the first connection port 710 and the second connection port 720 and the second side 752.

As described above, when the seating groove 750 and the seating protrusion 330 are formed with different shapes in the left and right direction or in the front and rear direction, the problem of the filter head 300 being fitted into the connection member 700 in the opposite direction can be prevented.

In addition, the filter socket 100 may have an inner surface formed as a curved surface, and the connection member 700 may have a surface formed as a curved surface 760 that comes into contact with the inner surface of the filter socket 100.

The filter socket 100 may have an inner surface formed as a curved surface, and the filter head 300 may have a surface that contacts the filter socket 100 formed as a curved surface 333.

The filter socket 100 may have an inner surface formed as a curved surface, and the surface of the flow path switching member 400 that comes into contact with the filter socket 100 may be formed as a curved surface.

The filter socket 100 has a filter coupling port 103 into which the filter head 300 is fitted, and the filter head 300 forms a seating protrusion 330 extending to both sides.

In addition, the filter coupling port 103 may be formed so that the width of the upper side thereof is greater than or equal to the length in the first direction of the seating protrusion 330. Accordingly, the seating protrusion 330 can pass through the filter coupling port 103.

In addition, a mounting groove 105 having a reduced width is formed at the lower end of the filter coupling port 103, and the mounting groove 105 is formed to be smaller than the first direction length of the seating protrusion 330.

Therefore, when the filter head 300 is coupled to the filter socket 100, the seating protrusion 330 passes through the filter coupling port 103.

In addition, when switching from the first state to the second state as described above, the seating protrusion 330 rotates while coming into contact with the inner surface of the filter socket 100.

In addition, since the seating protrusion 330 is longer in the first direction than the mounting groove 105, the seating protrusion 330 can be fixed in a manner that it is mounted on the upper end of the mounting groove 105. On the other hand, the water introduction pipe 310 and the water discharge pipe 320 pass through the mounting groove 105.

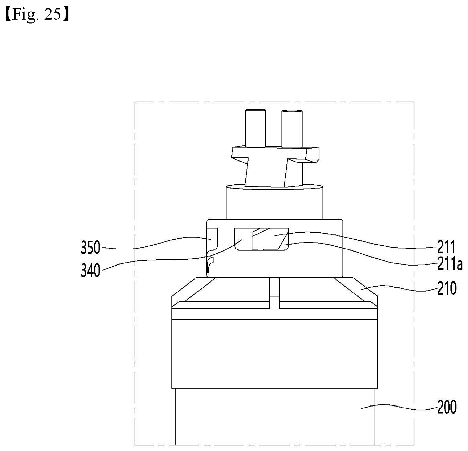

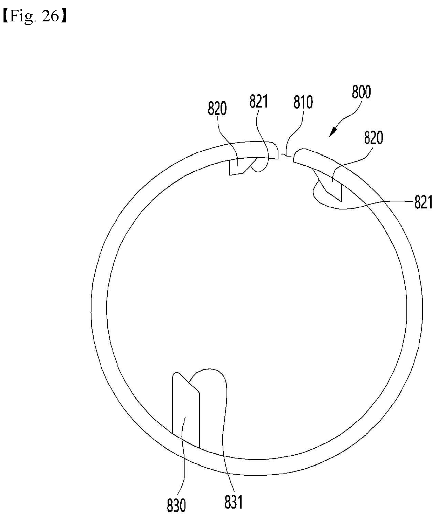

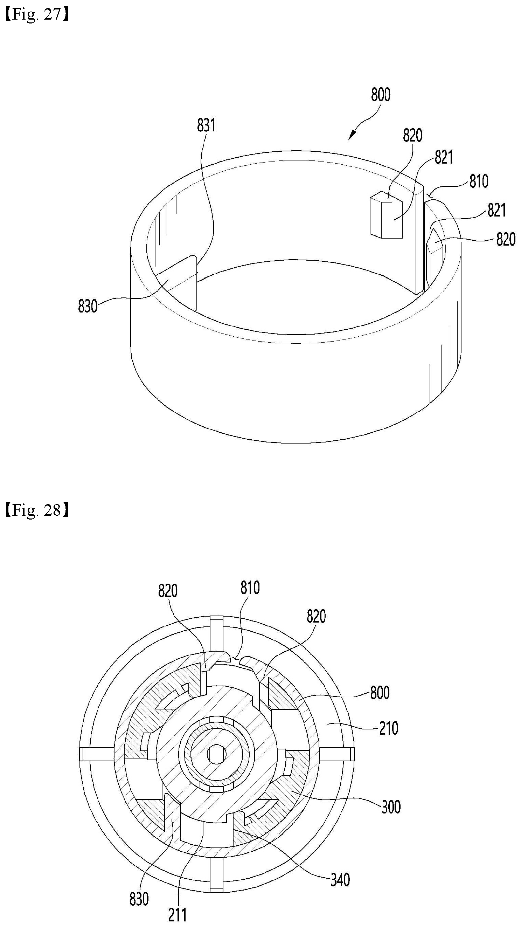

FIG. 25 is a front view illustrating a state where a filter cap and a filter head, which are components of the present disclosure, are coupled. FIG. 26 is a plan view illustrating a fixed cover, which is a component of the present disclosure. FIG. 27 is a perspective view illustrating the fixed cover. FIG. 28 is a cross-sectional view illustrating a state where the fixed cover is coupled with the filter head and filter cap.

Referring to FIGS. 25 to 28, the upper end of the filter housing 200 includes a filter cap 210 that is coupled with the filter head 300, a fastening protrusion 211 is formed on the filter cap 210, and a through-hole 340 is formed on the filter head 300 so as to confirm the fastening protrusion 211 from the outside.

The fastening protrusion 211 can form an inclined surface 211a on one or the other side.

The inclined surface 211a may be formed at the lower right corner of the fastening protrusion 211 based on the drawing, or may be formed at the upper left corner.

As described above, when the inclined surface 211a is formed, the work of fitting the fastening protrusion 211 into through-hole 340 or separating the fastening protrusion 211 from the through-hole 340 can be carried out more easily.

As described above, when the fastening protrusion 211 is fitted into the through-hole 340, the filter cap 210 is properly connected to the filter head 300.

Accordingly, the user can check the position of the fastening protrusion 211 through the through-hole 340 while the filter cap 210 of the filter housing 200 is fitted to the filter head 300 and whether the filter cap 210 is properly coupled to the filter head 300.

As another example, fastening protrusions 211 may be formed on both sides of the filter cap 210, and through-holes 340 may be formed on both sides of the filter head 300.

Meanwhile, when the filter head 300 and the filter cap 210 are coupled as described above and the filter is stored, transported, or redisposed, there is a risk that the filter head 300 and the filter cap 210 may be separated arbitrarily.

To prevent this, a fixed cover 800 covering the outer peripheral surface of the filter head 300 may be provided when the filter head 300 and the filter cap 210 are coupled.

The fixed cover 800 may have a ring shape.

The fixed cover 800 may have a ring shape with one side open.

The fixed cover 800 can be understood as a configuration that conceals the outer peripheral surface of the filter head 300 while the filter cap 210 is fitted to the filter head 300.

The fixed cover 800 has one side open to form an inlet part 810.

In addition, through the open inlet part 810, a fixed cover 800 is fitted in the form of a clip to cover the outer peripheral surface of the filter head 300. In addition, the outer peripheral surface of the filter head 300 can be covered by the fixed cover 800.

In this state, the fixed cover 800 needs to be fixed to the filter head 300 so that it does not move.

For example, at least one fixed hook 820 protruding inward may be formed on the inner peripheral surface of the fixed cover 800, and a hook groove 350 into which the fixed hook 820 is inserted may be formed in the filter head 300.

The hook groove 350 may be formed concavely inward on the outer peripheral surface of the filter head 300, or may have an open shape penetrating through the outer peripheral surface of the filter head 300.

The fixed hook 820 can be formed adjacent to the inlet part 810.

The fixed hook 820 can be formed at both end portions of the fixed cover 800 defining the inlet part 810 or at a position adjacent to both end portions.

In addition, the fixed hooks 820 can be hooked and restrained at both end portions of the hook groove 350.

The fixed hook 820 can form a downwardly inclined surface 821 in a direction far from the inlet part 810 and in a direction close to the inlet part 810.

When the inclined surface 821 is formed as described above, the filter cap 210 can be more easily fitted to the filter head 300 along the inclined surface 821, and the fixing hook 820 can also be more easily fitted to the hook groove 350.

Additionally, the fixed cover 800 may have a play prevention protrusion 830 formed on the inner peripheral surface extending toward the center.

The play prevention protrusion 830 can be fitted into the through-hole 340.

As described above, the fastening protrusion 211 of the filter cap 210 is fitted into and fixed to the through-hole 340.

In addition, when the fastening protrusion 211 is fitted into the through-hole 340, a play may be created in the circumferential direction between the through-hole 340 and the fastening protrusion 211.

In addition, through this play, the filter cap 210 or filter head 300 may rotate arbitrarily, causing shaking.

The play prevention protrusion 830 can be fixed by being fitted into the play between the through-hole 340 and the fastening protrusion 211. Accordingly, as the play between the through-hole 340 and the fastening protrusion 211 is reduced or eliminated, the state where the filter cap 210 or the filter head 300 is coupled can be firmly maintained.

Additionally, the end portion of the play prevention protrusion 830 can come into contact with the outer peripheral surface of the filter cap 210.

In addition, the end portion of the play prevention protrusion 830 can be formed as an inclined surface 831 or a curved surface so as to stably contact the outer peripheral surface of the filter cap 210.

At this time, the play prevention protrusion 830 may be formed on one side of the fixed cover 800, and the inlet part 810 and the fixed hook 820 may be formed on the opposite side of the play prevention protrusion 830.

In addition, when separating the fixed cover 800 from the filter cap 210 or filter head 300, in order to easily separate the play prevention protrusion 830, the play prevention protrusion 830 may be formed at a position facing the inlet part 810 on the inner surface of the fixed cover 800.

In the above case, since the fixed cover 800 covers the outside of the filter head 300 without shaking when the filter head 300 and the filter cap 210 are coupled, the area of the filter head 300 exposed to the outside is minimized, and the coupled state of the filter head 300 and the filter cap 210 can be firmly maintained.

In addition, during the process of storing and moving the filter, removal of the filter head 300 and the filter cap 210 can be prevented, and during the process of using the filter, removal of the filter head 300 and the filter cap 210 can be prevented, thereby preventing problems such as water leakage.

According to the present disclosure as described above, when installing a filter, the filter can be installed simply by fitting the filter head into the filter socket and turning the filter head to one side, so that installation and replacement of the filter are easy, and the user can install and replace the filter directly.

In addition, when separating the filter, the filter can be separated by simply turning the filter head to the other side and removing the filter head from the filter socket, making it easy to separate and replace the filter, and the user can separate and replace the filter directly.

Above all, when the filter is separated, the flow path inside the filter socket is switched to the bypass mode, so that water introduced into the introduction port of the filter socket flows through the bypass flow path and out the discharge port of the filter socket, which has the advantage of preventing water leakage.

In addition, when the filter is installed in this state, the flow path inside the filter socket is automatically switched to the purification mode, so that water introduced into the introduction port of the filter socket passes through the filter and then flows out through the discharge port of the filter socket, which has the advantage of producing purified water.

According to the present disclosure as described above, the area of the filter flow path exposed to the outside can be minimized during filter storage or filter replacement. Furthermore, by reducing the area of the filter flow path exposed to the outside, external foreign substances are prevented from being introduced the inside of the filter, resulting in the advantage of preventing contamination of the filter.

In addition, the volume of the filter flow path exposed to the outside can be reduced, minimizing the amount of water remaining in the filter flow path, thereby minimizing the occurrence of water stains, sedimentation, or the like.

## Claims

1. A water treatment apparatus comprising:
a filter socket having an introduction port formed on one side and a discharge port formed on the other side relative to a first direction;
a filter housing forming a filtration space therein;
a filter head coupled to an upper side of the filter housing; and
a cylindrical flow path switching member to which the filter head is coupled, which is accommodated in the filter socket, and which rotates about the first direction as an axis;
wherein the flow path switching member includes:
a bypass flow path configured to guide water introduced into the introduction port to the discharge port in a first state where the filter head is coupled;
a water introduction flow path configured to guide water introduced into the introduction port toward the filter head and filter housing in a second state rotated by a predetermined angle relative to the first state; and
a water discharge flow path configured to guide water from the filter housing and the filter head toward the discharge port.

2. The water treatment apparatus of claim 1,
wherein the filter head includes a water introduction pipe extending in the second direction and configured to communicate with the water introduction flow path, and a water discharge pipe extending in the second direction and formed parallel to the water introduction pipe and configured to communicate the water discharge flow path.

3. The water treatment apparatus of claim 2,
wherein the water introduction flow path, in the second state,
includes a first inlet configured to communicate with the introduction port and a first outlet configured to communicate with the water introduction pipe, and
wherein the water discharge flow path, in the second state,
includes a second inlet configured to communicate with the water discharge pipe and a second outlet configured to communicate with the discharge port.

4. The water treatment apparatus of claim 3,
wherein the first inlet and the first outlet are formed in an intersecting direction, and
wherein the second inlet and the second outlet are also formed in an intersecting direction.

5. The water treatment apparatus of claim 3,
wherein at least a portion of the water introduction flow path and the water discharge flow path are formed in a curved shape or at least a portion of the water introduction flow path and the water discharge flow path are formed in a folded shape.

6. The water treatment apparatus of claim 3,
wherein the first inlet and the second outlet are formed on the same line in the first direction, and
wherein the first outlet and the second inlet are formed on the same line in the first direction.

7. The water treatment apparatus of claim 3,
wherein the bypass flow path, in the first state, includes a third inlet configured to communicate with the introduction port and a third outlet configured to communicate with the discharge port.

8. The water treatment apparatus of claim 7,
wherein an intermediate flow path extending in the first direction and configured to bypass the water introduction flow path and the water discharge flow path is formed between the third inlet and the third outlet.

9. The water treatment apparatus of claim 7,
wherein the first inlet and the third inlet are formed in a straight line in a circumferential direction of the flow path switching member, and
wherein the second outlet and the third outlet are formed in a straight line in the circumferential direction of the flow path switching member.

10. The water treatment apparatus of claim 9,
wherein the flow path switching member has, on the outer peripheral surface thereof, a first groove part formed concavely inward around the first inlet and the third inlet, and a second groove part formed concavely inward around the second outlet and the third outlet, and
wherein a first sealing member is fitted into each of the first groove part and the second groove part.

11. The water treatment apparatus of claim 10,
wherein the first sealing member includes:
first and second O-rings formed on both sides in a closed-curve shape; and
a pair of connection parts connecting both end portions of the first O-ring part to both end portions of the second O-ring part.

12. The water treatment apparatus of claim 1,
wherein extension directions of the water introduction flow path and the water discharge flow path and an extension direction of the bypass flow path are perpendicular to each other.

13. The water treatment apparatus of claim 1,
wherein the filter socket forms a cylindrical hollow part extending in the first direction to accommodate the flow path switching member.

14. The water treatment apparatus of claim 13,
wherein the filter socket has the introduction port and the discharge port formed at the rear, and
wherein a filter coupling port formed at the front to which the filter head is coupled.

15. The water treatment apparatus of claim 1,
wherein the filter socket is open on both sides and further includes an outer cover formed with side covers that cover the open both sides of the filter socket.

16. The water treatment apparatus of claim 15,
wherein the outer cover further includes an upper cover configured to connect the side cover and to cover the upper side of the filter socket.

17. The water treatment apparatus of claim 3, further comprising:
a connection member coupled to the flow path switching member to connect the first outlet and the second inlet of the flow path switching member with the water introduction pipe and the water discharge pipe of the filter head.

18. The water treatment apparatus of claim 17,
wherein the connection member forms a first connection port and a second connection port into which the water introduction pipe and the water discharge pipe are fitted.

19. The water treatment apparatus of claim 17,
wherein a second sealing member is fitted between the first connection port and the second connection port and the first outlet and the second inlet for sealing purposes,
wherein the water introduction pipe sequentially passes through the first connection port, the second sealing member, and the first outlet, and
wherein the water discharge pipe sequentially passes through the second connection port, the second sealing member, and the second inlet.

20. The water treatment apparatus of claim 17,
wherein the connection member has a seating groove formed concavely inwardly on the surface where the water introduction pipe and the water discharge pipe are fitted, and
wherein the filter head has a seating protrusion formed therein to fit into the seating groove.

21. The water treatment apparatus of claim 20,
wherein the seating groove is formed with different inclinations on the first side and the second side facing each other, and
wherein the third and fourth sides of the seating protrusion are formed with different inclinations, corresponding to the first and second sides of the seating groove.

22. The water treatment apparatus of claim 17,
wherein the filter socket has a curved inner surface, and
wherein the connection member has a surface that contacts the filter socket as a curved surface.

23. The water treatment apparatus of claim 1,
wherein the filter socket has a curved inner surface, and
wherein the filter head has a surface that contacts the filter socket as a curved surface.

24. The water treatment apparatus of claim 1,
wherein the filter socket includes a filter coupling port into which the filter head is inserted,
wherein the filter head forms a seating protrusion extending to both sides, and
wherein the filter coupling port has an upper width formed larger than the first direction length of the seating protrusion, and a lower width formed smaller than the first direction length of the seating protrusion.

25. The water treatment apparatus of claim 1, further comprising:
a fixed cover having a ring shape with one side open and covering an outer peripheral surface of the filter head.

26. The water treatment apparatus of claim 25,
wherein at least one fixing hook is formed on an inner peripheral surface of the fixing cover, and
wherein a hook groove into which the fixing hook is inserted is formed in the filter head.
